# EUROPEAN PATENT APPLICATION

(11) **EP 4 749 495 A1**
(43) Date of publication of application: **27.05.2026**
(21) Application number: 25218482.5
(22) Date of filing: 25.11.2025
(51) Int. Cl.: G06F 21/57, H04L 9/40

(54) **CYBERSECURITY RISK DETECTION FOR A SERVICE**

(30) Priority: 26.11.2024 US 202418960497
(71) Applicant: CrowdStrike Inc., Sunnyvale, CA 94086 (US)
(72) Inventor: SIDIS, Amir, Tel Aviv (IL); LELLOUCHE, Anna ROZIN, Hod Hasharon (IL); ADLER, Shay, Tel Aviv (IL); COHEN, Raz, Giv'atayim (IL)
(74) Representative: Murgitroyd & Company

(57) **Abstract**

The present disclosure provides an approach of collecting contextual execution data of a service executing in a runtime environment. The contextual execution data indicates a communication between the service and a runtime entity within the runtime environment. The approach determines a cybersecurity risk score of the service based on the contextual execution data and prioritizes the service based on the cybersecurity risk score. In turn, the approach performs a remediation of a cybersecurity threat to the service based on the prioritizing.

## Description

### TECHNICAL FIELD

Aspects of the present disclosure relate to cybersecurity, and more particularly, to cybersecurity risk detection for a service.

### BACKGROUND

Cybersecurity refers to the practice of protecting computer systems, networks, and digital assets from theft, damage, unauthorized access, and various forms of cyber threats. Cybersecurity threats encompass a wide range of activities and actions that pose risks to the confidentiality, integrity, and availability of computer systems and data. These threats can include malicious activities such as viruses, ransomware, and hacking attempts aimed at exploiting vulnerabilities in software or hardware. Additionally, cybersecurity threats also encompass suspicious activities, such as unusual patterns of network traffic or unauthorized access attempts, which may indicate potential security breaches or weaknesses that require investigation and mitigation.

### SUMMARY

Accordingly there is provided a method, a system, and a computer program as detailed in the claims that follow.

### BRIEF DESCRIPTION OF THE DRAWINGS

The described embodiments and the advantages thereof may best be understood by reference to the following description taken in conjunction with the accompanying drawings. These drawings in no way limit any changes in form and detail that may be made to the described embodiments by one skilled in the art without departing from the spirit and scope of the described embodiments.
FIG. 1 is a block diagram that illustrates an example system for determining cybersecurity risks for services, in accordance with some embodiments of the present disclosure.
FIG. 2 is a detail flow diagram of a method for using contextual execution data to determine a cybersecurity risk score of a service and prioritizing the service for remediation based on the cybersecurity risk score, in accordance with some embodiments of the present disclosure.
FIG. 3 is a flow diagram of a method for using contextual execution data to determine a cybersecurity risk score of a service and prioritizing the service for remediation based on the cybersecurity risk score, in accordance with some embodiments of the present disclosure.
FIG. 4 is a block diagram that illustrates an example system for using contextual execution data to determine a cybersecurity risk score of a service and prioritizing the service for remediation based on the cybersecurity risk score, in accordance with some embodiments of the present disclosure.
FIG. 5 is a block diagram of an example computing device that may perform one or more of the operations described herein, in accordance with some embodiments of the present disclosure.

### DETAILED DESCRIPTION

Application security management, such as Application Security Posture Management (ASPM), is an approach of managing and improving the security status of software applications. ASPM involves continuously monitoring, assessing, and enhancing the security measures in place to protect applications from vulnerabilities and threats. ASPM systems represent an advancement over conventional approaches that primarily focus on infrastructure elements such as virtual machines (VMs) and containers. ASPM systems provide a dynamic assessment by examining the application layer itself, including its runtime behavior and interactions.

However, Application Security Posture Management (ASPM) faces cybersecurity challenges due to the increasing complexity and interconnectivity of modern software environments. One of the challenges is the continuous identification and mitigation of vulnerabilities across diverse application landscapes, which often include legacy systems, third-party components, and cloud-native applications. Additionally, the dynamic nature of application development, characterized by frequent updates and deployments, necessitates real-time security monitoring and adaptive threat response mechanisms.

The present disclosure addresses the above-noted and other deficiencies by determining cybersecurity risk scores of services based on contextual execution data of a service executing in a runtime environment and prioritizing services based on their corresponding cybersecurity risk score. This facilitates more efficient risk management, ensuring that high-risk services receive immediate attention while low-risk services are appropriately deprioritized, ultimately enhancing the overall security and resilience of production environments.

In some embodiments, the present disclosure uses a processing device to collect contextual execution data of a service executing in a runtime environment. The contextual execution data indicates a communication between the service and a runtime entity within the runtime environment. The contextual execution data enables understanding of the operational context and interactions of the service, which forms the basis for subsequent cybersecurity risk assessments. In some embodiments, the runtime entity may include at least one of a database, another service, a microservice, an internet-facing connection, an application programming interface (API), or a combination thereof. In some embodiments, the database includes personally identifiable information (PII).

The present disclosure uses the processing device to determine a cybersecurity risk score of the service based on the contextual execution data and prioritize the service based on the cybersecurity risk score. In some embodiments, the processing device computes an attack surface score that is based on communication pathways to other runtime entities, such as another service, an internet-facing connection, a database comprising personally identifiable information (PII), or a combination thereof. The processing device then uses the attack surface score in the determining of the cybersecurity risk score.

In some embodiments, the processing device computes a threat score that is based on vulnerabilities associated with the service, such as a CVE (Common Vulnerabilities and Exposures), an unsecured communication, a misconfigured hardware, a misconfigured virtual machine (VM), a network misconfiguration, or a combination thereof. The processing device then uses the threat score in the determining of the cybersecurity risk score.

In some embodiments, the processing device computes an impact score that corresponds to a potential impact of the service being compromised based on a number of communication pathways to a number of runtime entities, such as a blast radius that includes access to personally identifiable information (PII). In some embodiments, the present disclosure uses a processing device to increase the cybersecurity risk score when the service has access to both the internet-facing connection and the PII. The processing device then uses the impact score in the determining of the cybersecurity risk score.

The processing device prioritizes the service based on the cybersecurity risk score and, in turn, performs a remediation of a cybersecurity threat to the service based on the prioritizing. In some embodiments, the remediation includes inhibiting the service access to an internet-facing connection.

As discussed herein, the present disclosure provides an approach that improves the operation of a computer system by dynamically evaluating and contextualizing the security posture of applications during runtime. This involves assessing the attack surface, threats, and potential impacts, thereby enabling more precise prioritization and remediation of security vulnerabilities. In addition, the present disclosure provides an improvement to the technological field of cybersecurity by introducing a novel risk assessment framework that assigns a cybersecurity score to services within an application context. This approach integrates business criticality, blast radius, and threat levels into a unified risk score, facilitating more effective and efficient management of security risks in production environments.

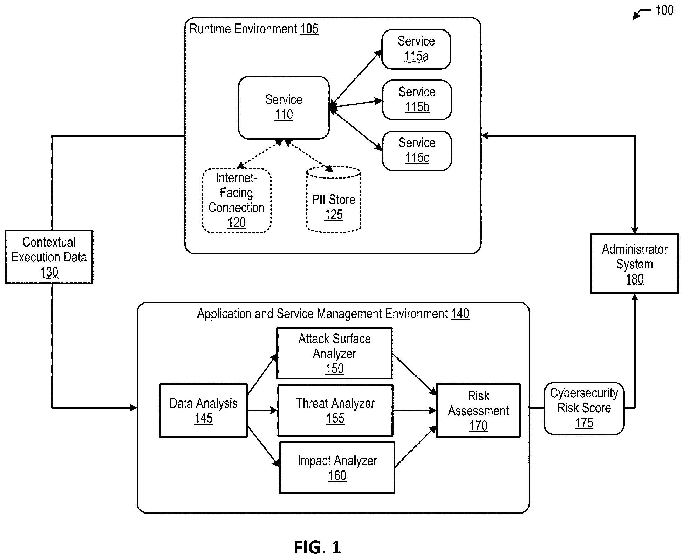

FIG. 1 is a block diagram that illustrates an example system for determining cybersecurity risks for services, in accordance with some embodiments of the present disclosure. System 100 includes runtime environment 105 and application and service management environment 140. Runtime environment 105 may be, for example, a customer computing environment. Application and service management environment 140 may include, for example, capabilities of an ASPM as discussed herein, and capabilities to perform risk assessments of services included in runtime environment 105.

Runtime environment 105 includes service 110 and runtime entities 115a, 115b, 115c, 120, and 125. In one embodiment, runtime entities 115a, 115b, 115c may be services, microservices, or a combination thereof. For example, service 110 may be a user authentication service that is responsible for verifying user credentials, managing sessions, and issuing authentication tokens. Service 110 may interact with a database service (115a) to validate user credentials and store session information; a user profile service (115b) to fetch and update user details after authentication; and a notification service (115c) to send notifications or alerts to users upon successful login or password changes through the notification service. In one embodiment, service 110 may also be accessible via runtime entity 120 (internet facing connection 120), have access to runtime entity 125 (PII store 125) that includes personally identifiable information (PII), or a combination thereof. Internet-facing connection 120 provides access to service 110 from the public internet, which allows interaction from external users or systems. PII store 125 includes data that can be used to identify an individual, either on its own or when combined with other information.

Application and service management environment 140 operates, in one embodiment, without an agent to collect contextual execution data 130. In one embodiment, application and service management environment 140 utilizes a tool that periodically or on-demand collects contextual execution data 130 from runtime environment 105, ensuring no persistent presence within the workload. Application and service management environment 140 then uses data analysis 145 to parse and format contextual execution data 130 accordingly for attack surface analyzer 150, threat analyzer 155, and impact analyzer 160.

Attack surface analyzer 150 evaluates the communication pathways and exposure of service 110 and computes an attack surface score. For instance, service 110 may interact with databases, other services, microservices, internet-facing connections, application programming interfaces (APIs), etc., thereby mapping how service 110 can be accessed.

Threat analyzer 155 evaluates vulnerabilities associated with service 110 and computes a threat score, such as Common Vulnerabilities and Exposures (CVEs), findings of unencrypted communications, and other security signals. For example, if service 110 communicates with other services using unsecured HTTP without TLS (Transport Layer Security), or if service 110 resides on a virtual machine (VM) with misconfigurations or improper network policies, these elements contribute to the threat score. This evaluation helps identify services that are prone to compromise.

Impact analyzer 160 considers the potential consequences of a service being compromised and computes an impact score. Impact analyzer 160 examines factors such as access to databases containing PII, the extent of internal system connections (indicating the blast radius), and the potential business loss if service 110 is compromised. A service with extensive internal connections and access to sensitive data will have a higher impact score compared to a service with minimal connections and no database interactions.

In turn, the attack surface score, threat score, and impact score are synthesized into a cybersecurity risk score (via risk assessment 170), which provides an indication of the relative risk associated with each service within runtime environment 105. By aggregating this information, application and security management environment 140 conducts a unique risk assessment for the entire runtime environment 105, prioritizing vulnerabilities and misconfigurations from with respect to the business criticality of workloads. Services with higher risk scores warrant greater attention and stringent security measures, whereas services with lower risk scores may require less focus. In turn, application and security management environment 140 sends risk score 175 to administrator system 180. In one embodiment, application and security management environment 140 sends prioritization and remediation information to administrator system 180. In one embodiment, administrator system 180 uses cybersecurity risk score 175 to prioritize service 110 and perform remediations accordingly.

In one embodiment, this risk assessment methodology enables the prioritization of security efforts based on the calculated risk scores. High-risk services, characterized by significant attack surfaces, notable threats, and substantial impact potential, are prioritized for remediation and protective measures. Conversely, low-risk services, with minimal attack surfaces, minor threats, and limited impact potential, are deprioritized. The innovative risk assessment approach leverages unique information gathered by application and service management environment 140 through automated reverse engineering of application production artifacts, considering the runtime environment 105. The comprehensive analysis results in a cybersecurity risk score that incorporates unique application parameters, effectively prioritizing other security signals.

In one embodiment, application and security management environment 140 enhances the ability to contextualize security signals, incorporating business awareness attributes. High-level systems may utilize this information to generate periodic reports highlighting the top 10% to 15% of high-risk services. The platform enables proactive risk management by providing remediation steps for identified threats, such as addressing CVEs, securing communications, and correcting misconfigurations. For instance, a service with a high-risk score due to multiple threat points, such as CVEs and unencrypted communications, may require encryption adjustments and configuration changes to reduce its risk. Conversely, a service with minimal attack surface, no significant threats, and limited impact will have a lower risk score, even if it handles PII.

In one embodiment, application and security management environment 140 identifies accidental PII access by lower-priority services, such as access by an unencrypted internet facing connection. By performing a remediation such as reassigning PII handling, the overall risk is minimized. For example, the PII access may be reassigned to a more secure service (e.g., encrypted internet facing connection). In another example, the service may not require PII access and the PII access of the service may be removed altogether. In yet another example, the PII access may be moved deeper into the data pipeline to reduce the security risk. This approach ensures that high-risk services are adequately protected, while less critical services receive appropriate attention.

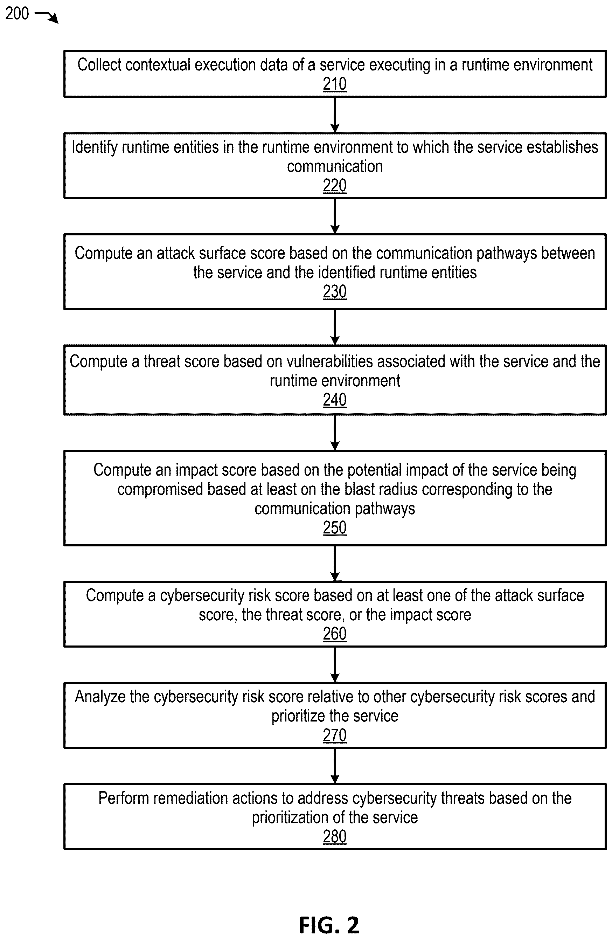

FIG. 2 is a flow diagram of a method 200 for using contextual execution data to determine a cybersecurity risk score of a service and prioritizing the service for remediation based on the cybersecurity risk score, in accordance with some embodiments of the present disclosure.

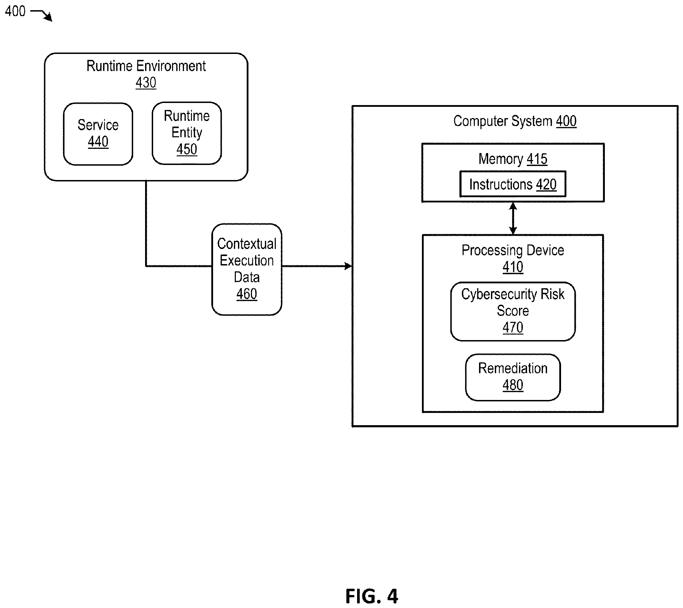

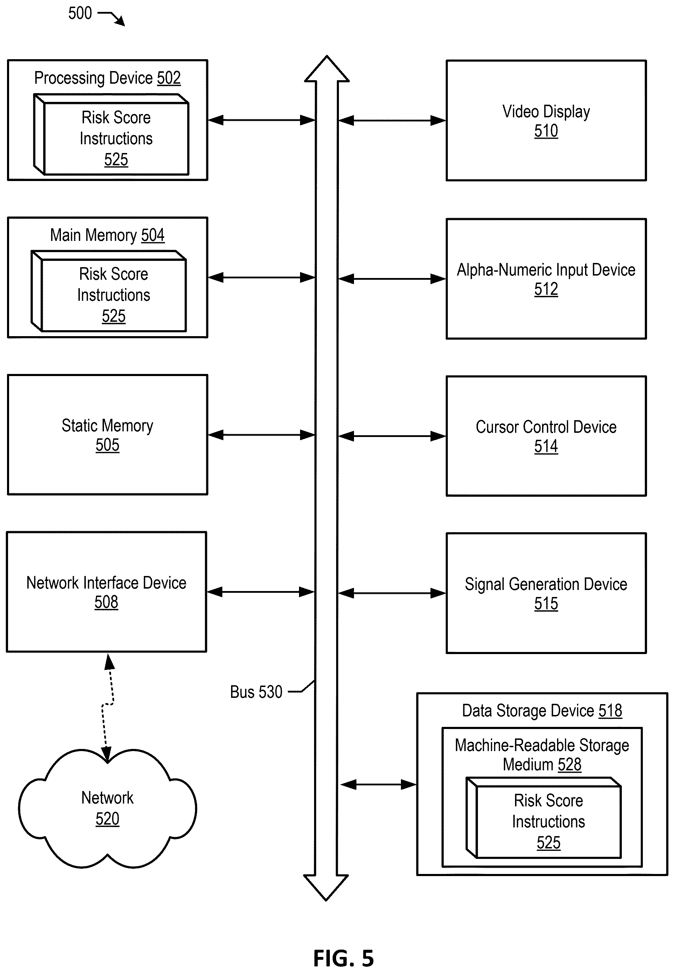

Method 200 may be performed by processing logic that may include hardware (e.g., a processing device), software (e.g., instructions running/executing on a processing device), firmware (e.g., microcode), or a combination thereof. In some embodiments, at least a portion of method 200 may be performed by application and service management environment 140 (shown in FIG. 1), processing device 410 (shown in FIG. 4), processing device 502 (shown in FIG. 5), or a combination thereof.

With reference to FIG. 2, method 200 illustrates example functions used by various embodiments. Although specific function blocks ("blocks") are disclosed in method 200, such blocks are examples. That is, embodiments are well suited to performing various other blocks or variations of the blocks recited in method 200. It is appreciated that the blocks in method 200 may be performed in an order different than presented, and that not all of the blocks in method 300 may be performed.

With reference to FIG. 2, method 200 begins at block 210, whereupon processing logic collects contextual execution data of a service executing in a runtime environment. The contextual execution data indicates a communication between the service and a runtime entity within the runtime environment. The contextual execution data is fundamental for understanding the operational context and interactions of the service, which forms the basis for subsequent cybersecurity risk assessments.

At block 220, processing logic identifies runtime entities in the runtime environment to which the service establishes communication. In some embodiments, the runtime entities include a database, another service, a microservice, an internet-facing connection, an application programming interface (API), or a combination thereof. In some embodiments, the database includes personally identifiable information (PII).

At block 230, processing logic computes an attack surface score based on the communication pathways between the service and the identified runtime entities. In one embodiment, the attack surface score is based on communication pathways to runtime entities including another service, an internet-facing connection, a database comprising personally identifiable information (PII), or a combination thereof. In one embodiment, processing logic may count the number of connections of the service and weight the connections based on what they are connected to and whether the connections are encrypted or secure. For example, increased weightings may be applied to PII connection access, unsecure internet facing connections, etc. In one embodiment, the weightings may be based on how far away a particular service is from another service. For example, PII access connected directly to an internet facing connection may be weighted higher than PII access several layers removed from the internet facing connection. An increased attack surface score correlates to an increased security risk.

At block 240, processing logic computes a threat score based on vulnerabilities associated with the service and the runtime environment. In one embodiment, the vulnerabilities associated with the service may be a CVE (Common Vulnerabilities and Exposures), an unsecured communication, a misconfigured hardware, a misconfigured virtual machine (VM), a network misconfiguration, or a combination thereof. For example, security signals from misconfigured hardware may increase the threat score, and libraries associated with the service may be weighted based on CVE severity (critical, high, low), reachability, or a combination thereof. An increased threat score correlates to an increased security risk.

At block 250, processing logic computes an impact score based on the potential impact of the service being compromised based at least on the blast radius corresponding to the communication pathways. In some embodiments, the impact score corresponds to an impact of the service being compromised based on a blast radius from the communication pathways, access to personally identifiable information (PII), or a combination thereof. For example, the impact score of an edge service that does not access sensitive data may have a lower impact score compared with the impact score of an embedded service that accesses sensitive data. The impact score increases as the security risk increases. For example, the impact score increases when the service has access to both the internet-facing connection and the PII.

At block 260, processing logic computes a cybersecurity risk score based on at least one of the attack surface score, the threat score, or the impact score. At block 270, processing logic analyzes the cybersecurity risk score relative to other cybersecurity risk scores and prioritizes the service. At block 280, processing logic performs remediation actions to address cybersecurity threats based on the prioritization of the service. In one embodiment, the remediation includes inhibiting the access by the service to the internet-facing connection.

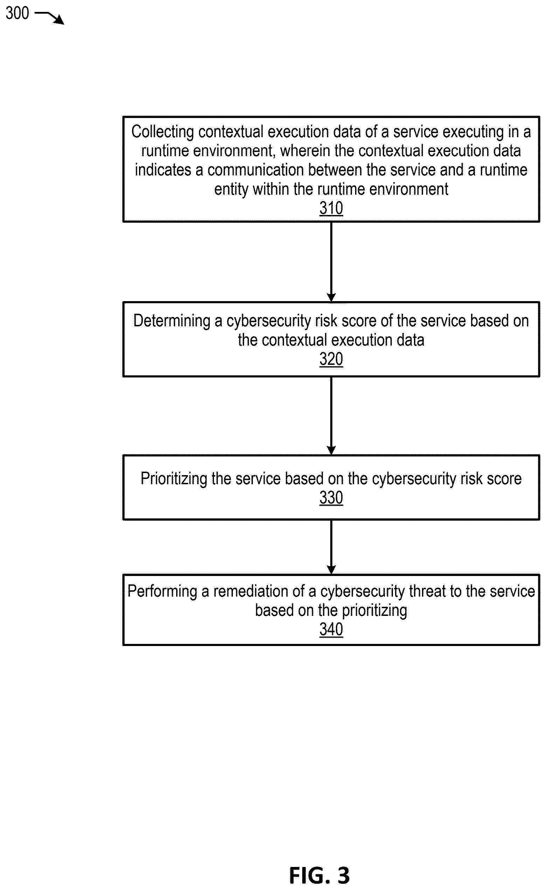

FIG. 3 is a flow diagram of a method 300 for using contextual execution data to determine a cybersecurity risk score of a service and prioritizing the service for remediation based on the cybersecurity risk score, in accordance with some embodiments of the present disclosure.

Method 300 may be performed by processing logic that may include hardware (e.g., a processing device), software (e.g., instructions running/executing on a processing device), firmware (e.g., microcode), or a combination thereof. In some embodiments, at least a portion of method 300 may be performed by application and service management environment 140 (shown in FIG. 1), processing device 410 (shown in FIG. 4), processing device 502 (shown in FIG. 5), or a combination thereof.

With reference to FIG. 3, method 300 illustrates example functions used by various embodiments. Although specific function blocks ("blocks") are disclosed in method 300, such blocks are examples. That is, embodiments are well suited to performing various other blocks or variations of the blocks recited in method 300. It is appreciated that the blocks in method 300 may be performed in an order different than presented, and that not all of the blocks in method 300 may be performed.

With reference to FIG. 3, method 300 begins at block 310, whereupon processing logic collects contextual execution data of a service executing in a runtime environment. The contextual execution data indicates a communication between the service and a runtime entity within the runtime environment. The contextual execution data is fundamental for understanding the operational context and interactions of the service, which forms the basis for subsequent cybersecurity risk assessments. In some embodiments, the runtime entity includes a database, another service, a microservice, an internet-facing connection, an application programming interface (API), or a combination thereof. In some embodiments, the database includes personally identifiable information (PII).

At block 320, processing logic determines a cybersecurity risk score of the service based on the contextual execution data prioritize the service based on the cybersecurity risk score. In some embodiments, the cybersecurity risk score is based on an attack surface score corresponding to communication pathways to runtime entities including another service, an internet-facing connection, a database comprising personally identifiable information (PII), or a combination thereof. In some embodiments, the cybersecurity risk score is based on a threat score corresponding to vulnerabilities associated with the service, including a CVE (Common Vulnerabilities and Exposures), an unsecured communication, a misconfigured hardware, a misconfigured virtual machine (VM), a network misconfiguration, or a combination thereof. In some embodiments, the cybersecurity risk score is based on an impact score corresponding to an impact of the service being compromised based on a blast radius based on the communication pathways, access to personally identifiable information (PII), or a combination thereof. In some embodiments, the present disclosure uses a processing device to increase the cybersecurity risk score when the service has access to both the internet-facing connection and the PII.

At block 330, processing logic prioritizes the service based on the cybersecurity risk score. At block 340, processing logic performs a remediation of a cybersecurity threat to the service based on the prioritizing. In some embodiments, the remediation comprises inhibiting the access by the service to an internet-facing connection.

FIG. 4 is a block diagram that illustrates an example system for using contextual execution data to determine a cybersecurity risk score of a service and prioritizing the service for remediation based on the cybersecurity risk score, in accordance with some embodiments of the present disclosure.

Computer system 400 includes processing device 410 and memory 415. Memory 415 stores instructions 420 that are executed by processing device 410. Instructions 420, when executed by processing device 410, cause processing device 410 to collect contextual execution data 460 of a service 440 executing in a runtime environment 430. The contextual execution data 460 indicates a communication between the service 440 and a runtime entity 450 within the runtime environment 430.

Processing device 410 determines a cybersecurity risk score 470 of the service 440 based on the contextual execution data 460 and prioritizes the service 440 based on the cybersecurity risk score 470. In turn, processing device 410 performs a remediation 480 of a cybersecurity threat to the service 440 based on the prioritizing.

FIG. 5 illustrates a diagrammatic representation of a machine in the example form of a computer system 500 within which a set of instructions, for causing the machine to perform any one or more of the methodologies discussed herein for determining a cybersecurity risk score based on contextual execution data.

In alternative embodiments, the machine may be connected (e.g., networked) to other machines in a local area network (LAN), an intranet, an extranet, or the Internet. The machine may operate in the capacity of a server or a client machine in a client-server network environment, or as a peer machine in a peer-to-peer (or distributed) network environment. The machine may be a personal computer (PC), a tablet PC, a set-top box (STB), a Personal Digital Assistant (PDA), a cellular telephone, a web appliance, a server, a network router, a switch or bridge, a hub, an access point, a network access control device, or any machine capable of executing a set of instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein. In some embodiments, computer system 500 may be representative of a server.

The exemplary computer system 500 includes a processing device 502, a main memory 504 (e.g., read-only memory (ROM), flash memory, dynamic random access memory (DRAM), a static memory 506 (e.g., flash memory, static random access memory (SRAM), etc.), and a data storage device 518 which communicate with each other via a bus 530. Any of the signals provided over various buses described herein may be time multiplexed with other signals and provided over one or more common buses. Additionally, the interconnection between circuit components or blocks may be shown as buses or as single signal lines. Each of the buses may alternatively be one or more single signal lines and each of the single signal lines may alternatively be buses.

Computer system 500 may further include a network interface device 508 which may communicate with a network 520. The computer system 500 also may include a video display unit 510 *(e.g.,* a liquid crystal display (LCD) or a cathode ray tube (CRT)), an alphanumeric input device 512 *(e.g.,* a keyboard), a cursor control device 514 *(e.g.,* a mouse) and an acoustic signal generation device 516 *(e.g.,* a speaker). In some embodiments, video display unit 510, alphanumeric input device 512, and cursor control device 514 may be combined into a single component or device *(e.g.,* an LCD touch screen).

Processing device 502 represents one or more general-purpose processing devices such as a microprocessor, central processing unit, or the like. More particularly, the processing device may be complex instruction set computing (CISC) microprocessor, reduced instruction set computer (RISC) microprocessor, very long instruction word (VLIW) microprocessor, or processor implementing other instruction sets, or processors implementing a combination of instruction sets. Processing device 502 may also be one or more special-purpose processing devices such as an application specific integrated circuit (ASIC), a field programmable gate array (FPGA), a digital signal processor (DSP), network processor, or the like. The processing device 502 is configured to execute risk score instructions 525, for performing the operations and steps discussed herein.

The data storage device 518 may include a machine-readable storage medium 528, on which is stored one or more sets of risk score instructions 525 (e.g., software) embodying any one or more of the methodologies of functions described herein. The risk score instructions 525 may also reside, completely or at least partially, within the main memory 504 or within the processing device 502 during execution thereof by the computer system 500; the main memory 504 and the processing device 502 also constituting machine-readable storage media. The risk score instructions 525 may further be transmitted or received over a network 520 via the network interface device 508.

The machine-readable storage medium 528 may also be used to store instructions to perform a method for intelligently scheduling containers, as described herein. While the machine-readable storage medium 528 is shown in an exemplary embodiment to be a single medium, the term "machine-readable storage medium" should be taken to include a single medium or multiple media (e.g., a centralized or distributed database, or associated caches and servers) that store the one or more sets of instructions. A machine-readable medium includes any mechanism for storing information in a form (e.g., software, processing application) readable by a machine (e.g., a computer). The machine-readable medium may include, but is not limited to, magnetic storage medium (e.g., floppy diskette); optical storage medium (e.g., CD-ROM); magneto-optical storage medium; read-only memory (ROM); random-access memory (RAM); erasable programmable memory (e.g., EPROM and EEPROM); flash memory; or another type of medium suitable for storing electronic instructions.

Unless specifically stated otherwise, terms such as "collecting," "determining," "prioritizing," "performing," "computing," "utilizing," "increasing," or the like, refer to actions and processes performed or implemented by computing devices that manipulates and transforms data represented as physical (electronic) quantities within the computing device's registers and memories into other data similarly represented as physical quantities within the computing device memories or registers or other such information storage, transmission or display devices. Also, the terms "first," "second," "third," "fourth," etc., as used herein are meant as labels to distinguish among different elements and may not necessarily have an ordinal meaning according to their numerical designation.

Examples described herein also relate to an apparatus for performing the operations described herein. This apparatus may be specially constructed for the required purposes, or it may comprise a general purpose computing device selectively programmed by a computer program stored in the computing device. Such a computer program may be stored in a computer-readable non-transitory storage medium.

The methods and illustrative examples described herein are not inherently related to any particular computer or other apparatus. Various general purpose systems may be used in accordance with the teachings described herein, or it may prove convenient to construct more specialized apparatus to perform the required method steps. The required structure for a variety of these systems will appear as set forth in the description above.

The above description is intended to be illustrative, and not restrictive. Although the present disclosure has been described with references to specific illustrative examples, it will be recognized that the present disclosure is not limited to the examples described. The scope of the disclosure should be determined with reference to the following claims, along with the full scope of equivalents to which the claims are entitled.

As used herein, the singular forms "a", "an" and "the" are intended to include the plural forms as well, unless the context clearly indicates otherwise. It will be further understood that the terms "comprises", "comprising", "includes", and/or "including", when used herein, specify the presence of stated features, integers, steps, operations, elements, and/or components, but do not preclude the presence or addition of one or more other features, integers, steps, operations, elements, components, and/or groups thereof. Therefore, the terminology used herein is for the purpose of describing particular embodiments only and is not intended to be limiting.

It should also be noted that in some alternative implementations, the functions/acts noted may occur out of the order noted in the figures. For example, two figures shown in succession may in fact be executed substantially concurrently or may sometimes be executed in the reverse order, depending upon the functionality/acts involved.

Although the method operations were described in a specific order, it should be understood that other operations may be performed in between described operations, described operations may be adjusted so that they occur at slightly different times or the described operations may be distributed in a system which allows the occurrence of the processing operations at various intervals associated with the processing.

Various units, circuits, or other components may be described or claimed as "configured to" or "configurable to" perform a task or tasks. In such contexts, the phrase "configured to" or "configurable to" is used to connote structure by indicating that the units/circuits/components include structure (e.g., circuitry) that performs the task or tasks during operation. As such, the unit/circuit/component can be said to be configured to perform the task, or configurable to perform the task, even when the specified unit/circuit/component is not currently operational (e.g., is not on). The units/circuits/components used with the "configured to" or "configurable to" language include hardware--for example, circuits, memory storing program instructions executable to implement the operation, etc. Reciting that a unit/circuit/component is "configured to" perform one or more tasks, or is "configurable to" perform one or more tasks, is expressly intended not to invoke 35 U.S.C. § 112(f) for that unit/circuit/component. Additionally, "configured to" or "configurable to" can include generic structure (e.g., generic circuitry) that is manipulated by software and/or firmware (e.g., an FPGA or a general-purpose processor executing software) to operate in manner that is capable of performing the task(s) at issue. "Configured to" may also include adapting a manufacturing process (e.g., a semiconductor fabrication facility) to fabricate devices (e.g., integrated circuits) that are adapted to implement or perform one or more tasks. "Configurable to" is expressly intended not to apply to blank media, an unprogrammed processor or unprogrammed generic computer, or an unprogrammed programmable logic device, programmable gate array, or other unprogrammed device, unless accompanied by programmed media that confers the ability to the unprogrammed device to be configured to perform the disclosed function(s).

The foregoing description, for the purpose of explanation, has been described with reference to specific embodiments. However, the illustrative discussions above are not intended to be exhaustive or to limit the present disclosure to the precise forms disclosed. Many modifications and variations are possible in view of the above teachings. The embodiments were chosen and described in order to best explain the principles of the embodiments and its practical applications, to thereby enable others skilled in the art to best utilize the embodiments and various modifications as may be suited to the particular use contemplated. Accordingly, the present embodiments are to be considered as illustrative and not restrictive, and the present disclosure is not to be limited to the details given herein, but may be modified within the scope and equivalents of the appended claims.

## Claims

1. A method comprising:
collecting contextual execution data of a service executing in a runtime environment, wherein the contextual execution data indicates a communication between the service and a runtime entity;
determining, by a processing device, a cybersecurity risk score of the service based on the contextual execution data;
prioritizing the service based on the cybersecurity risk score; and
performing a remediation of a cybersecurity threat to the service based on the prioritizing.

2. The method of claim 1, wherein the runtime entity comprises at least one of a database, another service, a microservice, an internet-facing connection, or an application programming interface, API.

3. The method of claim 2, wherein the database comprises personally identifiable information, PII.

4. The method of any preceding claim, further comprising:
computing an attack surface score based on one or more communication pathways to one or more runtime entities, wherein the one or more runtime entities comprise at least one of a database, another service, a microservice, an internet-facing connection, or an application programming interface, API; and
utilizing the attack surface score in the determining of the cybersecurity risk score.

5. The method of any preceding claim, further comprising:
computing a threat score based on one or more vulnerabilities associated with the service, wherein the one or more vulnerabilities comprise at least one of a Common Vulnerabilities and Exposures, CVE, an unsecured communication, a misconfigured hardware, a misconfigured virtual machine, VM, or a network misconfiguration; and
utilizing the threat score in the determining of the cybersecurity risk score.

6. The method of any preceding claim, further comprising:
computing an impact score corresponding to a potential impact of the service being compromised based on a number of communication pathways to a number of runtime entities; and
utilizing the impact score in the determining of the cybersecurity risk score.

7. The method of any preceding claim, wherein the cybersecurity risk score is based on whether the service has access to at least one of an internet-facing connection or personally identifiable information, PII.

8. The method of claim 7, further comprising:
increasing the cybersecurity risk score when the service has access to both the internet-facing connection and the PII.

9. The method of claim 8, wherein the remediation comprises inhibiting the service to have access to the internet-facing connection.

10. A system comprising:
a memory; and
a processing device, operatively coupled to the memory, and configured to carry out the method of any preceding claim.

11. A computer program that, when executed by a processing device, causes the processing device to carry out the method of any one of claims 1 to 9.
